# EUROPÄISCHE PATENTSCHRIFT

(11) **EP 3 490 795 B1**
(45) Veröffentlichungstag und Bekanntmachung des Hinweises auf die Patenterteilung: **08.12.2021**
(21) Anmeldenummer: 17734642.6
(22) Anmeldetag: 28.06.2017
(51) Int. Cl.: B32B 27/08, B32B 27/36

(54) **MEHRSCHICHTIGER FOLIENSTAPEL UND KARTENFÖRMIGER DATENTRÄGER**
MULTI-LAYER FILM STACK AND CARD-SHAPED DATA CARRIER
PILE DE FILMS MULTICOUCHES ET SUPPORT DE STOCKAGE DE DONNÉES SOUS FORME DE CARTE

(30) Priorität: 01.08.2016 DE 102016009307
(43) Veröffentlichungstag der Anmeldung: 05.06.2019
(73) Patentinhaber: Giesecke+Devrient Mobile Security GmbH, 81677 München (DE)
(72) Erfinder: RIEDL, Josef, 85395 Attenkirchen (DE)
(74) Vertreter: Giesecke + Devrient IP
(86) Internationale Anmeldenummer: PCT/EP2017/000768
(87) Internationale Veröffentlichungsnummer: WO 2018/024351

(56) Entgegenhaltungen:
- WO-A1-2015/003077
- JP-A- 2013 001 087
- JP-A- 2013 001 089
- JP-A- 2013 001 090
- JP-A- 2015 131 407

## Beschreibung

### Gebiet der Erfindung

Die vorliegende Erfindung betrifft einen mehrschichtigen Folienstapel, der durch Coextrusion hergestellt wird und in einem Laminatstapel eingesetzt werden kann, um kartenförmige Datenträger auszubilden.

Bei kartenförmigen Datenträgern kann es sich beispielsweise um Bezahlkarten mit einer kontaktlosen und/ oder kontaktbehafteten Schnittstelle, um Ausweiskarten, Rabattkarten, Zugangskarten, Mitarbeiterausweise, etc. handeln.

### Hintergrund der Erfindung

Die heutzutage hergestellten kartenförmigen ID-Datenträger sowie die heutzutage hergestellten Datenseiten für Ausweisdokumente werden nahezu ausschließlich aus Polycarbonat (PC) hergestellt. Alternativ kommen weitere Materialien, wie bspw. PVC, Teslin, Melinex^{®}, PETG (Polyethylenterephthalat) etc., bei der Herstellung zum Einsatz.

Polycarbonat weist gute laserbare Eigenschaften auf, jedoch handelt es sich bei Polycarbonat um ein hartes, steifes Material, welches chemisch nicht sehr beständig ist und bei Einwirkung von Spannung zur Rissbildung, insbesondere zur Bildung von Mikrorissen, neigen kann. Insofern ist es bei aus Polycarbonat ausgebildeten Datenträgern erforderlich zusätzliche Hilfsmaßnahmen zu ergreifen, um eine Langzeitstabilität des Datenträgers zu gewährleisten. Dazu sind insbesondere Maßnahmen zur Vermeidung von Rissen (Cracks) im Bereich des Moduls, d.h. des Chips, sowie die Beschichtung mit zusätzlichen Folien erforderlich. Selbst bei Anwendung derartiger Maßnahmen ist es nicht gewährleistet, dass eine ausreichende Langzeitstabilität des Datenträgers erreicht wird.

Aus der EP 2 927 881 A1 geht ein Datenträger hervor, bei welchem eine Kernlage aus Polycarbonat, Tritan^{®} oder Teslin ausgebildet sein kann. Vorteilhafte Eigenschaften des Tritans ^{®} werden nicht weiter erläutert, da das Hauptaugenmerk dieser Anmeldung auf das Anbringen einer Lentikularelementstruktur auf zumindest einem Teil der Oberfläche des Datenträgers gerichtet ist.

EP 2 725 063 A1 offenbart ein Verfahren zum Herstellen eines Folienblends. Gemäß dem Verfahren werden verschiedene Zusammensetzungen zu einer Blendschicht vermengt, wobei sich die einzelnen Zusammensetzungen untereinander stark vermischen. Das Dokument JP2013001089 offenbart eine mehrschichtige Folie, die aus zwei Hautschichten und einer durch Coextrudieren laminierten Kernschicht besteht.Das Dokument EP2281685 offenbart eine mehrschichtige Lasermarkierungsfolie

Tritan^{®}-Folien weisen den Nachteil auf, dass diese sehr schlecht kontrastreich laserbar sind. D.h. eine Laserpersonalisierung ist nicht in einem zufriedenstellenden Maße möglich.

### Zusammenfassung der Erfindung

Der Erfindung liegt die Aufgabe zugrunde einen mehrschichtigen Folienstapel sowie einen kartenförmigen Datenträger zur Verfügung zu stellen, die die bekannten Probleme aus dem Stand der Technik lösen und ferner dazu geeignet sind einen langlebigen und gleichzeitig laserbaren Folienstapel zur Verfügung zu stellen.

Die Lösung der Aufgabe erfolgt durch den Gegenstand der unabhängigen Patentansprüche. Bevorzugte Ausgestaltungen des erfindungsgemäßen Gegenstandes ergeben sich aus den Unteransprüchen.

Die Erfindung basiert auf dem Grundgedanken, dass laserbare und nichtlaserbare Stoffe in einem Folienstapel auf geschickte Weise kombiniert werden sollen, um einen langlebigen und gleichzeitig gut laserbaren Folienstapel auszubilden.

Diese Aufgabe wird gemäß einem Mehrschichtiger, coextrudierter Folienstapel (10), welcher laserbar ist, aufweisend zumindest jeweils eine außenliegende Schicht (12,16), weiche einen Werkstoff, der mit unterschiedlichen Anteilen zumindest die Monomere Di-Methylterephthalat (DMT), 1,4-Zyklohexandimethanol (CHDM), und2,2,4,4-Tetramethyl-1,3-Zyklobutandiol (TMCD) umfasst (Tritan^{®})und einen Anteil PETG aufweist, sowie eine zwischen den außenliegenden Schichten angeordnete Schicht (14) mit einer Polycarbonat aufweisenden Schicht. De Folienstapel gekennzeichnet dass die Schicht (14) mit der Polycarbonat aufweisende Schicht einen Anteil eines Werkstoffs (Tritan^{®}) aufweist, welcher mit unterschiedlichen Anteilen zumindest die Monomere Di-Methylterephthalat (DMT), 1,4Zyklohexandimethanol (CHDM), und 2,2,4,4-Tetramethyl-13Zyklobutandiol (TMCD) umfasst.

Mehrschichtiger Folienstapel (10), aufweisend zumindest jeweils eine außenliegende Schicht (12,16), welche einen Werkstoff, der mit unterschiedlichen Anteilen zumindest die Monomere Di-Methylterephthalat(DMT), 1,4-Zyklohexandimethanol (CHDM), und 2,2,4,4-Tetramethyl-13Zyklobutandiol (TMCD) umfasst (Tritan«), und einen Anteil PETG aufweist, sowie eine zwischen den außen liegenden Schichten angeordnete Schicht (14) mit einer Schicht, welche einen Werkstoff, der mit unterschiedlichen Anteilen zumindest die Monomere Di-Methylterephthalat (DMT), 1,4Zyklohexandimethanol (CHDM), und 2,2,4,4-Tetramethyl-13Zyklobutandiol (TMCD) umfasst (Tritan*), sowie einen anorganischen Füllstoff, insbesondere Titandioxid, aufweist. Unter der außenliegenden Schicht aus einer Tritan^{®} und einen Anteil PETG aufweisenden Schicht wird eine Schicht verstanden, die zumindest teilweise Tritan^{®}- und PETG-Anteile aufweist oder aus bis zu 100 Gew.-% aus Tritan^{®} und PETG ausgebildet ist. Eine Schicht, welche nur z.T. aus Tritan^{®} besteht, kann beispielsweise zusätzlich PETG sowie zusätzliche

Verarbeitungshilfsmittel, wie beispielsweise Release- und Antiblock-Additive, aufweisen. PETG verbessert mit Vorteil den Verbund zwischen den weiteren Schichten.

Die "außenliegende Schicht" ist so zu verstehen, dass bei dem mehrschichtigen Folienstapel eine Vielzahl Folien verwendet werden kann, wobei jeweils als äußerste Schicht des Folienstapels die Tritan^{®} aufweisende Schicht verwendet wird. Alternativ ist die "außenliegende Schicht" so aufzufassen, dass zwischen den außenliegenden Schichten zumindest eine weitere, d.h. die Schicht mit der Polycarbonat aufweisenden Schicht angeordnet ist.

Zwischen den Tritan^{®} und einen Anteil PETG aufweisenden Schichten, d.h. innerhalb der außenliegenden Schichten, ist die Polycarbonat aufweisende Schicht angeordnet. Der Polycarbonat aufweisenden Schicht können zusätzliche Bestandteile beigemischt werden, wie beispielsweise Tritan^{®}, PETG, PC, PVC, ABS, etc, alternativ kann die Polycarbonat aufweisende Schicht ausschließlich Polycarbonat aufweisen.

Mit dem erfindungsgemäßen mehrschichtigen Folienstapel ist es besonders vorteilhaft möglich einen Folienstapel zur Verfügung zu stellen, der sowohl langlebig als auch laserbar ist. Die Tritan^{®} und einen Anteil PETG aufweisenden Schichten, welche sich an der Außenseite des Folienstapels befinden, sorgen für eine gute Haltbarkeit bzw. Langlebigkeit sowohl von der Tritan^{®} aufweisenden Schicht als auch von der Polycarbonat aufweisenden Schicht, da die Polycarbonat aufweisende Schicht zwischen den " Tritan^{®}-Schichten" "eingesperrt" bzw. angeordnet ist, so dass Einflüsse von außen, bzw. Chemikalien, Biegebeanspruchung, UV-Strahlung, keinen Einfluss auf das Polycarbonat nehmen können und demgemäß keine Mikrorisse in der Polycarbonat-Schicht entstehen können. Weiterhin ist es möglich, die Polycarbonat aufweisende Schicht gut zu lasern.

Gemäß einer Ausführungsform kann die Polycarbonat aufweisende Folie einen Anteil Tritan^{®} aufweisen. Auf diese Weise können durch das Blend aus Polycarbonat und Tritan^{®} sowohl die haltbaren Eigenschaften als auch die laserbaren Eigenschaften der beiden Stoffe besonders vorteilhaft vereint werden.

Gemäß der Erfindung weist die Tritan^{®} aufweisende Schicht einen Anteil PETG, insbesondere ein mit Gly.kol modifiziertes Polyethylenterephtalat auf. Durch Zugabe von PETG zu dem Tritan^{®} ist es möglich die Kosten für diese Schicht zu reduzieren, da PETG momentan günstiger als Tritan^{®} erworben werden kann.

Der Folienstapel wird mittels Coextrusion hergestellt. Auf diese Weise ist es effizient möglich mit hoher Geschwindigkeit große Mengen des Folienstapels zu produzieren, ohne dass eine Vermischung zwischen den einzelnen Schichten erfolgt.

Gemäß einer bevorzugten Ausführungsform weist der Folienstapel eine Schichtdicke von maximal 200 µm, bevorzugt maximal 100 µm auf.

Um die Laserbarkeit der Polycarbonat aufweisenden Folie bzw. irgendeiner Polycarbonat aufweisenden Schicht zu verbessern, kann die Folie bzw. die Schicht mit Laseradditiven dotiert werden. Besonders bevorzugt können hierbei pulverförmige Pigmente und/oder Pigmentgranulate eingesetzt werden.

Der Folienstapel kann opak und/oder transparent ausgeführt sein. Durch entsprechendes Verändern der Additive der jeweiligen Schicht des Folienstapels kann bewirkt werden, dass dieser opak oder transparent wird.

Weiterhin kommen die erfindungsgemäßen Vorteile bei einem mehrschichtigen Folienstapel aufweisend zumindest jeweils eine außenliegende Schicht aus einer Tritan^{®} aufweisenden Schicht sowie eine zwischen den außen liegenden Schichten angeordnete Schicht mit einer Tritan^{®} sowie einen anorganischen Füllstoff, insbesondere Titandioxid, aufweisenden Schicht zum Tragen. Tritan zeigt in Verbindung mit dem anorganischen Füllstoff, insbesondere mit Titandioxid, hervorragende Eigenschaften. Der Folienstapel kann auch mit Merkmalen der vorherigen Ausführungsformen frei kombiniert werden.

Die erfindungsgemäßen Vorteile ergeben sich ebenfalls bei Anwendung der Erfindung in einem kartenförmigen Datenträger, zu welchem auch eine Datenseite eines Passbuches bzw. eine Karte im Scheckkartenformat zählen kann, aufweisend den mehrschichtigen, oben beschriebenen Folienstapel. Auf diese Weise ist es besonders vorteilhaft möglich einen langlebigen und gleichzeitig laserbaren Folienstapel zur Verfügung zu stellen.

Gemäß einer Ausführungsform umfasst der Laminatstapel des Datenträgers zumindest zwei der mehrschichtigen, oben genannten Folienstapel, wobei die äußerste Schicht des Laminatstapels jeweils die Tritan^{®} aufweisende Schicht ist. In anderen Worten ist die nach außen zeigende Schicht, also die auf den beiden "Sichtseiten" angeordnete Schicht jeweils die Tritan^{®} aufweisende Folie bzw. Schicht. Auf diese Weise kann mit Vorteil eine Rissbildung in der außenliegenden Schicht des Datenträgers vermieden werden.

### Kurze Beschreibung der Zeichnungen

- Fig. 1: zeigt einen erfindungsgemäßen, mehrschichtigen Folienstapel gemäß einer ersten Ausführungsform, und
- Fig. 2: zeigt einen erfindungsgemäßen Datenträger gemäß einer weiteren Ausführungsform.

Ausführliche Beschreibung bevorzugter Ausführungsformen der Erfindung

Im Folgenden wird die Erfindung unter Bezugnahme auf beispielhafte Ausführungsformen beschrieben. Die in den Figuren gezeigten Schichten sind nicht maßstabsgetreu dargestellt und können in ihrer Dicke beliebig verändert werden, so dass vergleichsweise dünn dargestellte Schichten in der umgesetzten Variante der Erfindung sogar dicker als die vergleichsweise dünner dargestellten Schichten und umgekehrt sein können.

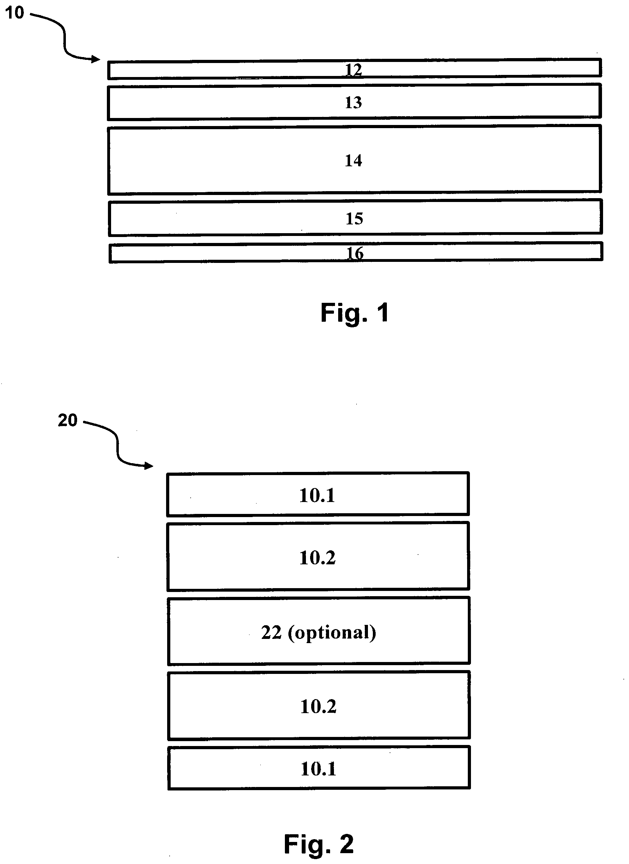

Fig. 1 zeigt einen mehrschichtigen, coextrudierten Folienstapel 10 mit jeweils einer außenliegenden Schicht 12,16 aus einer Tritan^{®} aufweisenden Schicht. Zwischen den außenliegenden Schichten 12, 16 aus der Tritan^{®} aufweisenden Schicht ist zumindest eine Innenschicht 14 angeordnet, welche aus einer Polycarbonat aufweisenden Folie ausgebildet ist. Die übrigen Schichten 13 und 15 sind fakultativ.

Die außenliegenden Schichten 12, 16 sind, da sie aus einer Tritan^{®} aufweisenden Folie ausgebildet sind, sehr langlebig. Bei Tritan^{®} handelt es sich um einen Werkstoff mit üblicherweise den folgenden Bestandteilen:
Drei Monomere, Di-Methylterephthalat (DMT), 1,4-Zyklohexandimethanol (CHDM), und 2,2,4,4-Tetramethyl-1,3-Zyklobutandiol (TMCD) mit verschiedenen Anteilen

Zu der Tritan^{®} aufweisenden Schicht kann, um die Kosten der Schicht sowie des coextrudierten Folienstapels zu reduzieren bei gleichzeitiger Beibehaltung der vorteilhaften Eigenschaften, PETG beigegeben werden. Weiterhin können Verarbeitungszusatzstoffe wie beispielsweise Release-und Antiblock-Additive und Laseradditive, welche im Stand der Technik bekannt sind, beigemischt werden.

Die innerhalb der außenliegenden Schichten 12, 16 angeordnete Schicht 14 weist Polycarbonat auf. Polycarbonat ist gut laserbar. Somit werden gute Lasereigenschaften erzielt. Die Schicht 14 kann fakultativ zusätzlich Tritan^{®}, anorganische Füllstoffe, wie beispielsweise Titandioxid und PETG aufweisen. Weiterhin können gemäß einer Ausgestaltung PVC und/oder ABS beigegeben werden. Gemäß einer alternativen Ausführungsform kann die Schicht 14 Tritan^{®} sowie einen anorganischen Füllstoff, insbesondere Titandioxid, aufweisen.

Die Polycarbonat aufweisenden Schichten, insbesondere die Schicht 14, können jeweils mit zumindest einem Laseradditiv dotiert werden. Beispielsweise können pulverförmige Pigmente verwendet werden, die in dem Polymer selbst einen Farbwechsel auslösen oder es können Pigmentgranulate als Laseradditiv verwendet werden, die unabhängig von dem Polymer funktionieren, da sie gewisserweise bereits selbst mit einem Polymer versehen sind. Weiterhin können in den Schichten 12, 16 aus einer Tritan^{®} aufweisenden Folie Laseradditive vorgesehen sein. Diese wirken besonders vorteilhaft, wenn in den Schichten 12, 16 aus einer Tritan^{®} aufweisenden Folie weiterhin Polycarbonat vorhanden ist.

Zwischen den Schichten 12 und 14 sowie zwischen den Schichten 14 und 16 können weitere Schichten 13 und 15 in beliebiger Anzahl vorgesehen sein. Diese Schichten können beispielsweise ebenfalls ein Polycarbonat, eine Mischung aus Polycarbonat und Tritan^{®} sowie eine Mischung aus Polycarbonat und PETG aufweisen. Bevorzugt ist der Anteil Polycarbonat in den Schichten 13 und 15 jedoch geringer als in der Schicht 14.

Der mehrschichtige Folienstapel 10 kann sowohl opak als auch transparent ausgebildet werden. In anderen Worten kann jede einzelne der Folien bedarfsgemäß opak und/oder transparent ausgebildet sein.

Der Folienstapel 10 wird mit einem Coextrusionsverfahren hergestellt. Dazu werden Schmelzströme der einzelnen Schichten 12-16 gebildet, welche in einem Zuführblock (Feedblock) geteilt und anschließend entsprechen dem gewünschten Aufbau des Folienstapels zusammengeführt werden, so dass bei einem bevorzugt symmetrischem Aufbau des Folienstapels 10 die jeweiligen Schichten, ausgehend von der "Mitte" des Folienstapels 10 übereinander gelegt werden.

Die mit den Laseradditiven versehene Schicht ist in der Regel höher dotiert als die (in Richtung der Lasereinwirkung) darüber liegende Schicht.

Der Folienstapel kann weiterhin wie folgt aufgebaut sein: Mehrschichtiger Folienstapel 10 aufweisend zumindest jeweils eine außenliegende Schicht 12, 16 aus einer Tritan^{®} (alternativ Tritan^{®} und PETG) aufweisenden Schicht sowie eine zwischen den außen liegenden Schichten angeordnete Schicht 14 mit einer Tritan^{®} sowie einen anorganischen Füllstoff, insbesondere Titandioxid, aufweisenden Schicht. Der Folienstapel ist durch Coextrusion herstellbar. Weitere Schichten in dem Stapel sind möglich, insbesondere sind weitere Schichten gemäß den oben angeführten Ausführungsformen möglich. Die Schichten 13 und 15 können aus Polycarbonat und transparent ausgebildet sein.

Der in Fig. 2 gezeigte Datenträger 20 weist eine Vielzahl Folienstapel 10.1, 10.2 und 22 auf. Wie bereits aus dem Bezugszeichen 10.1 und 10.2 erkennbar ist, handelt es sich bei diesen Folienstapeln um Abwandlungen bzw. Varianten des in Fig. 1 gezeigten Folienstapels 10. Beispielsweise handelt es sich bei dem Folienstapel 10.1, welcher jeweils an der Außenseite des Datenträgers 20 zur Geltung kommt, um einen transparenten Folienstapel und bei dem Folienstapel 10.2 handelt es sich um einen opaken Folienstapel. Mittels des entsprechend eingestellten Lasers ist es möglich in unterschiedlichen Tiefen in den jeweiligen Folienstapeln 10.1 bzw. 10.2 in die Polycarbonat aufweisende Folie (bzw. die dort angeordneten Laseradditiven) zu lasern. Optional kann zwischen den Folienstapeln 10.1, 10.2 und 10.2, 10.1 noch ein optionaler Folienstapel 22 zum Füllen des Datenträgers 20 angeordnet sein, so dass dieser die erforderliche Dicke nach dem Laminieren des Folienstapels aufweist.

Der Folienstapel 20 kann - in dem Fall ohne die Folie/Schicht 22 - zweimal die Folienstapel 10.2 aufweisen. Alternativ können diese Folienstapel 10.2 lediglich einmal ausgebildet sein.

Gemäß der Erfindung ist es jedoch erforderlich, dass von außen in den Folienstapel blickend, d.h. jeweils auf der "Sichtseite" des Datenträgers die äußerste Schicht 12, 16 jeweils die Tritan^{®} (alternativ Tritan^{®} und PETG) aufweisende Schicht ist. Dadurch wird die Haltbarkeit des Datenträgers 20 verbessert. In die darunter liegende Polycarbonat aufweisenden Schicht kann besonders vorteilhaft gelasert werden.

Die Schichtdicke des Folienstapels 10 beträgt maximal 200 µm, bevorzugt maximal 100 µm.

Der Datenträger 20 kann einen in dem Folienstapel angeordneten Chip sowie eine kontaktbehaftete und/ oder eine kontaktlose Schnittstelle aufweisen. Das anordnen eines Chips und der o.g. Schnittstellen ist im Stand der Technik bekannt, weshalb auf eine weitere Beschreibung verzichtet wird. Der Datenträger kann als Bezahlkarte und/oder als Ausweiskarte (ID-Karte) eingesetzt werden.

## Patentansprüche

1. Mehrschichtiger, coextrudierter Folienstapel (10), welcher laserbar ist, aufweisend zumindest
jeweils eine außenliegende Schicht (12,16), welche einen Werkstoff, der mit unterschiedlichen Anteilen zumindest die Monomere Di-Methylterephthalat (DMT), 1,4-Zyklohexandimethanol (CHDM), und 2,2,4,4-Tetramethyl-1,3-Zyklobutandiol (TMCD) umfasst und einen Anteil PETG aufweist, sowie
eine zwischen den außenliegenden Schichten angeordnete Schicht (14) mit einer Polycarbonat aufweisenden Schicht.

2. Folienstapel nach Anspruch 1, **dadurch gekennzeichnet, dass** die Schicht (14) mit der Polycarbonat aufweisende Schicht einen Anteil eines Werkstoffs aufweist, welcher mit unterschiedlichen Anteilen zumindest die Monomere Di-Methylterephthalat (DMT), 1,4-Zyklohexandimethanol (CHDM), und 2,2,4,4-Tetramethyl-1,3-Zyklobutandiol (TMCD) umfasst.

3. Folienstapel nach einem der vorhergehenden Ansprüche, **dadurch gekennzeichnet, dass** der Folienstapel eine Schichtdicke von maximal 200 µm, bevorzugt maximal 100 µm aufweist.

4. Folienstapel nach einem der vorhergehenden Ansprüche, **dadurch gekennzeichnet, dass** die Schicht (14) mit der Polycarbonat aufweisende Folie mit Laseradditiven, insbesondere pulverförmigen Pigmenten und/oder Pigmentgranulaten, dotiert ist.

5. Folienstapel nach einem der vorhergehenden Ansprüche, **dadurch gekennzeichnet, dass** der Folienstapel opak und/oder transparent ist.

6. Folienstapel nach einem der vorhergehenden Ansprüche, **dadurch gekennzeichnet, dass** zwischen der Schicht (12,16) aus einen Werkstoff, der mit unterschiedlichen Anteilen zumindest die Monomere Di-Methyl terephthalat (DMT), 1,4 Zyklohexandimethanol (CHDM), und 2,2,4,4-Tetramethyl-13Zyklobutandiol (TMCD) umfasst, aufweisenden Folie und der Schicht (14) mit der Polycarbonat aufweisenden Folie jeweils zumindest eine weitere Schicht (13, 15) angeordnet ist.

7. Folienstapel nach Anspruch 6, **dadurch gekennzeichnet, dass** die weitere Schicht (13,15) Polycarbonat, und/oder einen Blend aus Polycarbonat und einen Werkstoff, der mit unterschiedlichen Anteilen zumindest die Monomere Di-Methyl terephthalat (DMT), 1,4 Zyklohexandimethanol (CHDM), und 2,2,4,4-Tetramethyl-13Zyklobutandiol (TMCD) umfasst, und/oder einen Blend aus Polycarbonat und Polyethylenterephthalat aufweist.

8. Mehrschichtiger Folienstapel (10), aufweisend zumindest
jeweils eine außenliegende Schicht (12,16), welche einen Werkstoff, der mit unterschiedlichen Anteilen zumindest die Monomere Di-Methylterephthalat (DMT), 1,4-Zyklohexandimethanol (CHDM), und 2,2,4,4-Tetramethyl-1,3-Zyklobutandiol (TMCD) umfasst, und einen Anteil PETG aufweist,
sowie eine zwischen den außen liegenden Schichten angeordnete Schicht (14) mit einer Schicht, welche einen Werkstoff, der mit unterschiedlichen Anteilen zumindest die Monomere Di-Methylterephthalat (DMT), 1,4-Zyklohexandimethanol (CHDM), und 2,2,4,4-Tetramethyl-1,3-Zyklobutandiol (TMCD) umfasst,
sowie einen anorganischen Füllstoff, insbesondere Titandioxid, aufweist.

9. Kartenförmiger Datenträger (20) aufweisend den mehrschichtigen Folienstapel nach einem der vorhergehenden Ansprüche 1-8.

10. Datenträger nach Anspruch 9, **dadurch gekennzeichnet, dass** ein Laminatstapel des Datenträgers (20) zumindest zwei der mehrschichtigen Folienstapel (10) nach einem der vorhergehenden Ansprüche umfasst, wobei die äußerste Schicht des Laminatstapels jeweils die Werkstoff, der mit unterschiedlichen Anteilen zumindest die Monomere Di-Methyl terephthalat (DMT), 1,4 Zyklohexandimethanol (CHDM), und 2,2,4,4-Tetramethyl-13Zyklobutandiol (TMCD) umfasst, und einen Anteil PETG aufweisende Folie ist.

## Claims

1. A multilayer, coextruded foil stack (10), which is laserable,
having at least
in each case an outwardly disposed layer (12, 16) which has a material which comprises, with different proportions, at least the monomers di-methyl terephthalate (DMT), 1,4-cyclohexanedimethanol (CHDM), and 2,2,4,4-tetramethyl-1,3-cyclobutanediol (TMCD) and a proportion of PETG, as well as
a layer (14) arranged between the outwardly disposed layers with a layer having polycarbonate.

2. The foil stack according to claim 1, **characterized in that** the layer (14) with the layer having polycarbonate has a proportion of a material which comprises, with different proportions, at least the monomers di-methyl terephthalate (DMT), 1,4-cyclohexanedimethanol (CHDM), and 2,2,4,4-tetramethyl-1,3-cyclobutanediol(TMCD)

3. The foil stack according to any of the preceding claims, **characterized in that** the foil stack has a layer thickness of maximally 200 µm, preferably maximally 100 µm.

4. The foil stack according to any of the preceding claims, **characterized in that** the layer (14) with the foil having polycarbonate is doped with laser additives, in particular powdery pigments and/or pigment granulates.

5. The foil stack according to any of the preceding claims, **characterized in that** the foil stack is opaque and/or transparent.

6. The foil stack according to any of the preceding claims, **characterized in that** between the layer (12, 16) of the foil having a material which comprises, with different proportions, at least the monomers di-methyl terephthalate (DMT), 1,4-cyclohexanedimethanol (CHDM), and 2,2,4,4-tetramethyl-1,3-cyclobutanediol(TMCD), and the layer (14) with the foil having polycarbonate, there is arranged at least one further layer (13, 15) in each case.

7. The foil stack according to claim 6, **characterized in that** the further layer (13, 15) has polycarbonate, and/or a blend of polycarbonate and a material which comprises, with different proportions, at least the monomers di-methyl terephthalate (DMT), 1,4-cyclohexanedimethanol (CHDM), and 2,2,4,4-tetramethyl-1,3-cyclobutanediol(TMCD), and/or a blend of polycarbonate and polyethylene terephthalate.

8. A multilayer foil stack (10) having at least
in each case an outwardly disposed layer (12, 16) which has a material which comprises, with different proportions, at least the monomers di-methyl terephthalate (DMT), 1,4-cyclohexanedimethanol (CHDM), and 2,2,4,4-tetramethyl-1,3-cyclobutanediol (TMCD) and a proportion of PETG, as well as
a layer (14) arranged between the outwardly disposed layers with a layer having a material which comprises, with different proportions, at least the monomers di-methyl terephthalate (DMT), 1,4-cyclohexanedimethanol (CHDM), and 2,2,4,4-tetramethyl-1,3-cyclobutanediol (TMCD), as well as
an inorganic filler, in particular titanium dioxide.

9. A card-shaped data carrier (20) having the multilayer foil stack according to any of the preceding claims 1-8.

10. The data carrier according to claim 9, **characterized in that** a laminate stack of the data carrier (20) comprises at least two of the multilayer foil stacks (10) according to any of the preceding claims, wherein the outermost layer of the laminate stack is the foil having the material which comprises, with different proportions, at least the monomers di-methyl terephthalate (DMT), 1,4-cyclohexanedimethanol (CHDM), and 2,2,4,4-tetramethyl-1,3-cyclobutanediol (TMCD) and a proportion of PETG in each case.

## Revendications

1. Empilement de feuilles (10) multicouche coextrudé, pouvant être traité au laser, comportant au moins
respectivement une couche externe (12, 16) ayant une matière comprenant, en des proportions différentes, au moins les monomères téréphtalate de diméthyle (DMT), 1,4-cyclohexane diméthanol (CHDM) et 2,2,4,4-tétraméthyl-1,3-cyclobutanediol (TMCD), et ayant une proportion de PETG, ainsi que
une couche (14) agencée entre les couches externes, ayant une couche comportant du polycarbonate.

2. Empilement de feuilles selon la revendication 1, **caractérisé en ce que** la couche (14) ayant la couche comportant du polycarbonate comporte une proportion d'une matière qui, en des proportions différentes, comprend au moins les monomères téréphtalate de diméthyle (DMT), 1,4-cyclohexane diméthanol (CHDM) et 2,2,4,4-tétraméthyl-1,3-cyclobutanediol (TMCD).

3. Empilement de feuilles selon la revendication 1 ou 2, **caractérisé en ce que** l'empilement de feuilles a une épaisseur de couche d'au maximum 200 µm, de préférence d'au maximum 100 µm.

4. Empilement de feuilles selon une des revendication précédentes, **caractérisé en ce que** la couche (14) ayant la feuille comportant du polycarbonate est dopée avec des additifs pour laser, en particulier des pigments pulvérulents et/ou des granulés de pigments.

5. Empilement de feuilles selon une des revendication précédentes, **caractérisé en ce que** l'empilement de feuilles est opaque et/ou transparent.

6. Empilement de feuilles selon une des revendication précédentes, **caractérisé en ce que**, entre la couche (12, 16) en une matière comprenant, en des proportions différentes, au moins les monomères téréphtalate de diméthyle (DMT), 1,4-cyclohexane diméthanol (CHDM) et 2,2,4,4-tétraméthyl-1,3-cyclobutanediol (TMCD), et la couche(14) ayant la feuille comportant du polycarbonate, respectivement au moins une autre couche (13, 15) est agencée.

7. Empilement de feuilles selon la revendication 6, **caractérisé en ce que** l'autre couche (13, 15) a du polycarbonate et/ou un blend de polycarbonate et d'une matière qui, en des proportions différentes, comprend au moins les monomères téréphtalate de diméthyle (DMT), 1,4-cyclohexane diméthanol (CHDM) et 2,2,4,4-tétraméthyl-1,3-cyclobutanediol (TMCD),
et/ou a un blend de polycarbonate et de polytéréphtalate d'éthylène.

8. Empilement de feuilles (10) multicouche comportant au moins
respectivement une couche externe (12, 16) ayant une matière comprenant, en des proportions différentes, au moins les monomères téréphtalate de diméthyle (DMT), 1,4-cyclohexane diméthanol (CHDM) et 2,2,4,4-tétraméthyl-1,3-cyclobutanediol (TMCD), et ayant une proportion de PETG, ainsi que
une couche (14) agencée entre les couches externes, ayant une couche comportant une matière qui, en des proportions différentes, comprend au moins les monomères téréphtalate de diméthyle (DMT), 1,4-cyclohexane diméthanol (CHDM) et 2,2,4,4-tétraméthyl-1,3-cyclobutanediol (TMCD), ainsi qu'une substance de remplissage inorganique, en particulier du dioxyde de titane.

9. Support de données (20) en forme de carte comportant un empilement de feuilles multicouche selon une des revendications précédentes de 1 à 8.

10. Support de données selon la revendication 9, **caractérisé en ce qu'**une pile stratifiée du support de données (20) comprend au moins deux des empilements de feuilles (10) multicouches selon une des revendications précédentes, cependant que la couche la plus externe de la pile stratifiée comporte respectivement la matière comprenant, en des proportions différentes, au moins les monomères téréphtalate de diméthyle (DMT), 1,4-cyclohexane diméthanol (CHDM) et 2,2,4,4-tétraméthyl-1,3-cyclobutanediol (TMCD), et une proportion est une feuille comportant du PETG.
